# EUROPEAN PATENT APPLICATION

(11) **EP 4 786 823 A1**
(43) Date of publication of application: **05.08.2026**
(21) Application number: 26154550.3
(22) Date of filing: 27.01.2026
(51) Int. Cl.: F16H 25/20, F02K 1/76, F16F 15/03, F16H 25/22, F16H 25/24, H02K 7/06

(54) **ELECTROMECHANICAL ACTUATOR**

(30) Priority: 29.01.2025 IN 202511007386
(71) Applicant: Rohr, Inc., Chula Vista, CA 91910-2098 (US)
(72) Inventor: PRAKASH, Divya, 560054 Bangalore, KA (IN); PANDIAN, Navaneetha, 560037 Bangalore, KA (IN); LAKKAPPAKODI, Mahesha, 560048 Bangalore, KA (IN); GHANDOUR, Imad D., San Diego, CA 92122 (US); HUDSON, Timothy, Market Drayton, TF9 2BG (GB); PEREIRA, Elvis Jack, 560064 Bangalore, KA (IN); PRITEKEL, Joshua, La Mesa, CA 91942 (US)
(74) Representative: Dehns

(57) **Abstract**

An electromechanical actuator is provided that includes a gear box, a ball screw arrangement (52), an electric motor (74), a one-way clutch, an actuator clutch (76), a rotary magnetic damper (78), and a translating cylinder (54). The ball screw arrangement (52) includes a screw shaft (66) and a ball nut. The screw shaft (66) includes a helical groove (72) and ball bearings (70) are disposed between the screw shaft (66) and the ball nut. The screw shaft (66) is coupled with the gear box. The electric motor (74) has a stator (74A), a rotor (74B), and a drive shaft (74C). The one-way clutch is coupled with the EM drive shaft (74C), and is configured to permit rotation of the EM drive shaft (74C) in only a first rotational direction. A first clutch member (76A) of the actuator clutch (76) is coupled with the EM drive shaft (74C) and a second clutch member (76B) is coupled with the gear box. The actuator clutch (76) is disposable in an engaged or in a disengaged configuration.

## Description

### BACKGROUND OF THE INVENTION

### 1. Technical Field

The present disclosure relates to actuators in general and to electromechanical actuators for aircraft in particular.

### 2. Background Information

A nacelle often includes a pair of fan cowls and a pair of thrust-reverser doors (sometimes referred to as "C-Duct" doors). One of the fan cowls and one of the C-Duct doors is disposed on a first side of the engine and the other fan cowl and C-Duct door is disposed on the opposite side of the engine. The top end of the fan cowls and C-Duct doors are typically hinged to the pylon or to a frame structure at the top of the nacelle to permit them to be pivoted outwardly to provide access to the engine; e.g., for inspection and/or maintenance of the engine and components thereof. Some aircraft nacelles are equipped with actuators for opening and closing the C-Duct and fan cowl doors. Traditionally, these actuators have been hydraulically or electro-hydraulically operated. It would be useful to have an actuator that is light-weight, less susceptible to environmental contamination, one that is compact, and one that has enhanced reliability and durability.

### SUMMARY

According to an aspect of the present disclosure, an electromechanical actuator having an axial centerline is provided that includes an annular gear box, a ball screw arrangement, an annular electric motor, a one-way clutch, an actuator clutch, a rotary magnetic damper, and a translating cylinder. The ball screw arrangement extends along the axial centerline. The ball screw arrangement includes a screw shaft rotatable about the axial centerline, an annular ball nut, and a plurality of ball bearings. The screw shaft includes a helical groove configured to receive a portion of each ball bearing. The annular ball nut is engaged with the screw shaft with the plurality of ball bearings disposed between the screw shaft and the ball nut. The screw shaft is coupled with the gear box. The annular electric motor (EM) has an EM stator, an EM rotor, and an EM drive shaft. The EM rotor is coupled with the EM drive shaft. The one-way clutch is coupled with the EM drive shaft, and is configured to permit rotation of the EM drive shaft in a first rotational direction and to not permit rotation of the EM drive shaft in a second rotational direction that is opposite the first rotational direction. The actuator clutch has a first clutch member and a second clutch member. The first clutch member is coupled with the EM drive shaft and the second clutch member is coupled with the gear box. The actuator clutch is disposable in an engaged configuration and a disengaged configuration. The rotary magnetic damper (MD) has an MD first element and an MD second element. The first element is coupled with the second clutch member and the MD second element is coupled with the EM drive shaft. The translating cylinder is engaged with the ball nut. The electromechanical actuator is disposable in a retracted configuration wherein the translating cylinder is retracted and in a deployed configuration wherein the translating cylinder is deployed axially outwardly.

In any of the aspects or embodiments described above and herein, the electromechanical actuator may include a housing that encloses the annular electric motor, the one-way clutch, the actuator clutch, and the rotary magnetic damper.

In any of the aspects or embodiments described above and herein, the electromechanical actuator may include a shroud disposed radially outside of the translating cylinder when the electromechanical actuator is in the retracted configuration. The shroud may be configured to enclose all the translating cylinder except a distal end of the translating cylinder when the electromechanical actuator is in the retracted configuration.

In any of the aspects or embodiments described above and herein, the screw shaft may include a drive engagement portion and a screw portion. The screw portion may have an outer radial surface that includes a helical groove configured to receive a portion of each ball bearing. The annular ball nut may be disposed radially outside of the screw portion of the screw shaft and may include an inner radial surface configured with indentations for receiving a portion of the ball bearings. The drive engagement portion may be coupled with the gear box.

In any of the aspects or embodiments described above and herein, the actuator clutch may include a solenoid and the solenoid may be controllable to actuate the actuator clutch between the engaged configuration and the disengaged configuration.

In any of the aspects or embodiments described above and herein, the actuator clutch may be normally disposed in the disengaged configuration and the solenoid may be controllable to actuate the actuator clutch into the engaged configuration.

In any of the aspects or embodiments described above and herein, the one-way clutch may be a Sprag clutch.

In any of the aspects or embodiments described above and herein, the rotary magnetic damper may be a passive eddy current damper.

In any of the aspects or embodiments described above and herein, the electromechanical actuator may be configured to operate in an actuator deploying mode or an actuator retracting mode.

In any of the aspects or embodiments described above and herein, in the actuator deploying mode, the annular electric motor may drive the gear box, and the gear box may drive the screw shaft, and the screw shaft may drive the ball nut axially, and the ball nut may cause the translating cylinder to axially translate outwardly.

In any of the aspects or embodiments described above and herein, in the actuator deploying mode, the EM drive shaft may be rotating in the first rotational direction and the one-way clutch may be in a free-wheeling mode.

In any of the aspects or embodiments described above and herein, in the actuator deploying mode, the actuator clutch may be in the engaged configuration.

In any of the aspects or embodiments described above and herein, in the actuator deploying mode, the MD first element and the MD second element may be stationary relative to one another.

In any of the aspects or embodiments described above and herein, in the actuator deploying mode, the translating cylinder may be exposed outside of the shroud.

In any of the aspects or embodiments described above and herein, in the actuator retracting mode, the MD first element and the MD second element may be moving relative to one another.

In any of the aspects or embodiments described above and herein, in the actuator retracting mode, the rotary magnetic damper may produce an electromagnetic force that opposes rotation of the screw shaft.

In any of the aspects or embodiments described above and herein, in the actuator retracting mode, the actuator clutch may be in the disengaged configuration.

In any of the aspects or embodiments described above and herein, in the actuator retracting mode, a load applied to the translating cylinder may cause the translating cylinder to axially translate inwardly, the translating cylinder may drive the ball nut axially, the ball nut may cause the screw shaft to rotate, and the screw shaft may drive the gear box.

In any of the aspects or embodiments described above and herein, in the actuator retracting mode, the one-way clutch may be configured to prevent rotation of the EM drive shaft.

The foregoing features and elements may be combined in various combinations without exclusivity, unless expressly indicated otherwise. For example, aspects and/or embodiments of the present disclosure may include any one or more of the individual features or elements disclosed above and/or below alone or in any combination thereof. These features and elements as well as the operation thereof will become more apparent in light of the following description and the accompanying drawings. It should be understood, however, the following description and drawings are intended to be exemplary in nature and non-limiting.

### BRIEF DESCRIPTION OF THE DRAWINGS

FIG. 1 is a perspective view of an aircraft in accordance with various embodiments of the present disclosure.
FIG. 2 is a diagrammatic illustration of an aircraft thermal engine in the form of a gas turbine engine.
FIG. 3 is a diagrammatic view of a nacelle housing a gas turbine engine with the nacelle in a closed configuration.
FIG. 4 is a diagrammatic view of the nacelle shown in FIG. 3, with the aft cowl translated to expose the thrust reverser.
FIG. 5 is a diagrammatic view of a nacelle, illustrating the fan cowl and the aft cowl in an open configuration.
FIG. 6 is a diagrammatic perspective view of a present disclosure electromechanical actuator embodiment in a retracted configuration.
FIG. 7 is a diagrammatic perspective view of a present disclosure electromechanical actuator embodiment in a deployed configuration.
FIG. 8 is a diagrammatic sectional representation of a present disclosure electromechanical actuator embodiment.
FIG. 9 is an enlarged view of a portion of the electromechanical actuator embodiment shown in FIG. 8.

### DETAILED DESCRIPTION

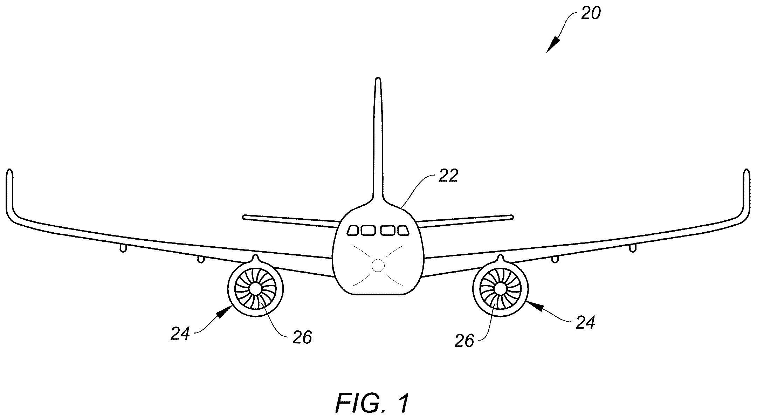

Aspects of the present disclosure include an electromechanical actuator that may be used to actuate a nacelle structure (e.g., an aircraft fan cowl or a C-Duct door), a nacelle that utilizes a present disclosure actuator, and an aircraft that utilizes the present disclosure system. FIG. 1 illustrates a conventional fixed wing aircraft 20 that may utilize embodiments of the present disclosure actuator. The aircraft 20 includes a fuselage 22 and a pair of nacelles 24. Each nacelle 24 includes a gas turbine engine 26.

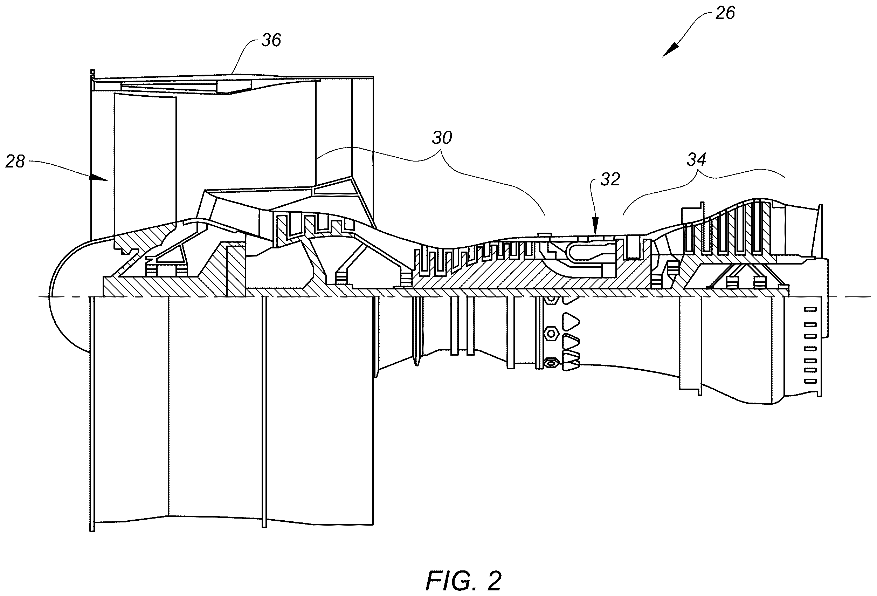

Referring to FIG. 2, an example of a gas turbine engine 26 is shown; e.g., a two-spool turbofan. The gas turbine engine 26 includes a fan section 28, a compressor section 30, a combustion section 32, and a turbine section 34. The fan section includes a fan case 36. The compressor, combustion, and turbine sections 30, 32, 34 may be referred to as the core engine section.

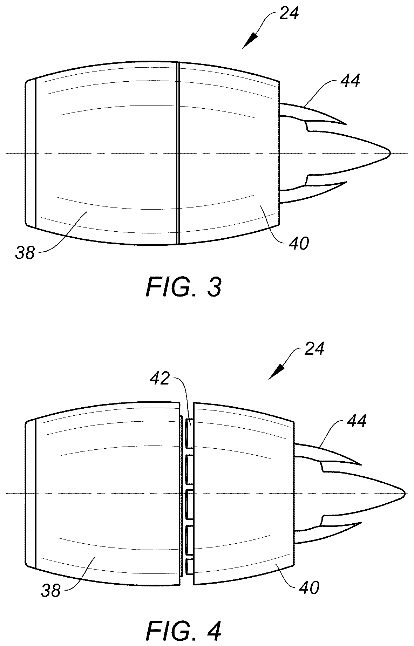

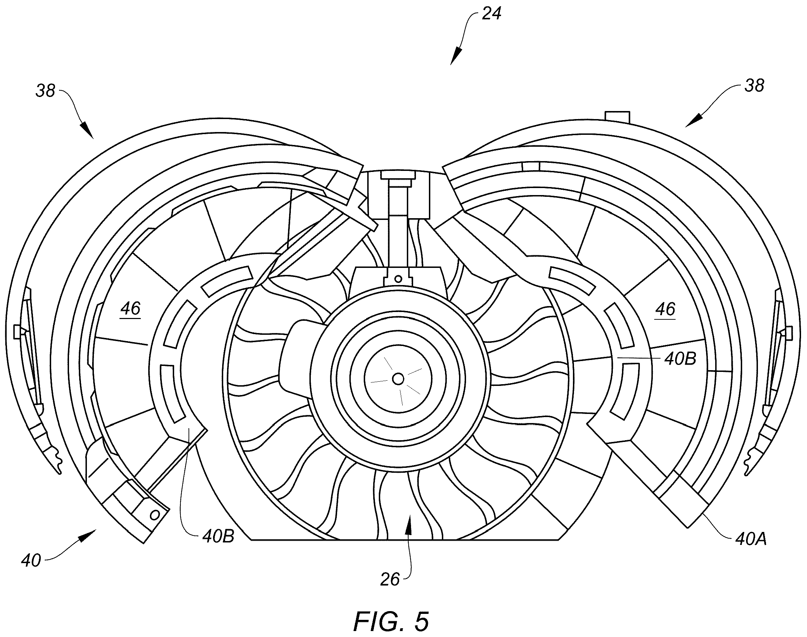

Referring to FIGS. 3 and 4, a gas turbine engine 26 (e.g., like that shown in FIG. 2) is enclosed within a nacelle 24. The nacelle 24 includes a fan cowl 38, an aft cowl 40, and a thrust reverser 42. The nacelle 24 is disposed about the fan case 36 of the gas turbine engine 26 to define a portion of a bypass passage. A core nacelle inner cowl 44 is disposed around the core engine section of the gas turbine engine 26. The fan cowl 38 and the aft cowl 40 are pivotable between a closed position (e.g., see FIGS. 3 and 4) and an open position (e.g., see FIG. 5) and to allow access to the engine 26 and the fan section 28. The aft cowl 40 includes the outer aft cowl 40A and the inner aft cowl 40B and a C-shaped duct 46 defined within a radial space therebetween. The fan cowl 38 and the aft cowl 40 may be transitioned from the closed position to the respective open position by rotating the respective cowl portion outward and upward as shown in FIG. 5.

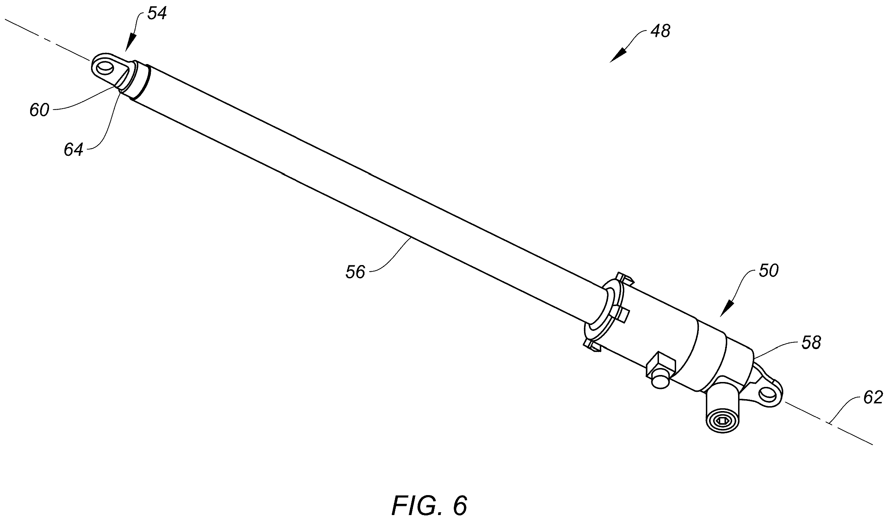

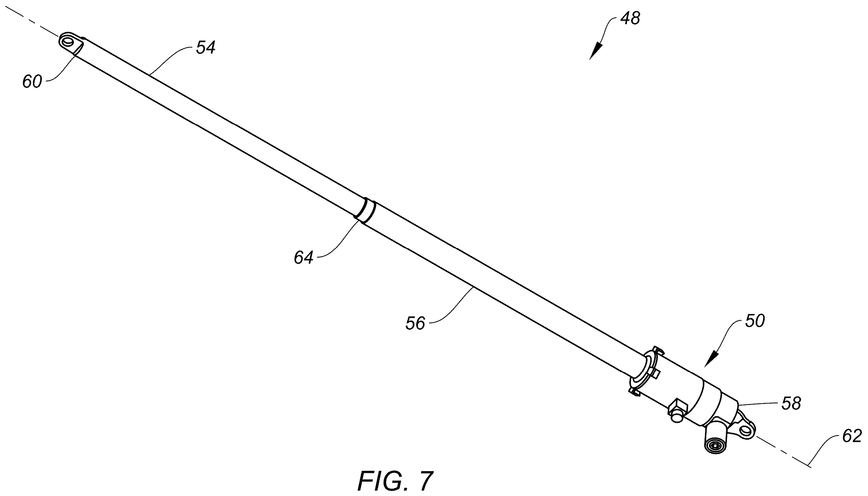

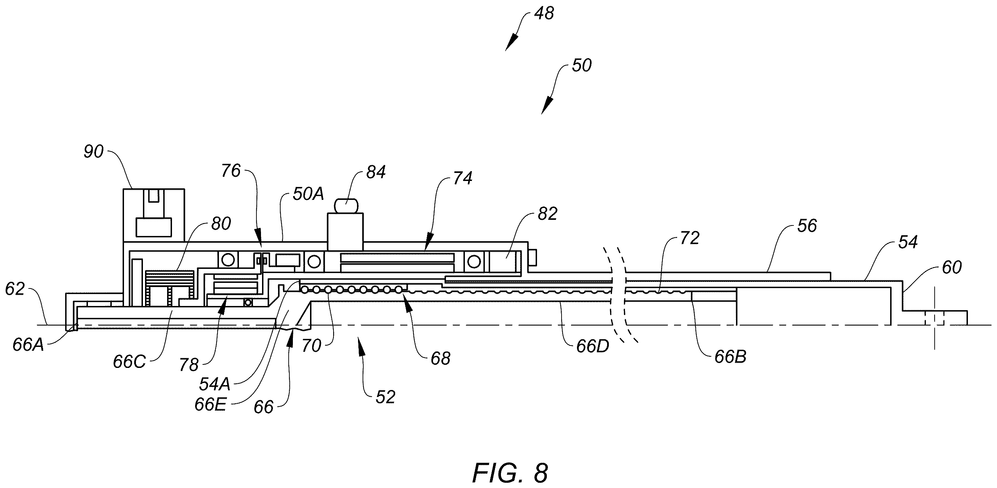

Referring to FIGS. 6 and 7, aspects of the present disclosure include a electromechanical actuator 48 that may be used to translate a respective fan cowl 38 or an aft cowl 40 portion between a closed position and an open position. The present disclosure actuator 48 is not limited to a nacelle 24 application. The actuator 48 includes a jackhead 50, a ball screw arrangement 52 (e.g., see FIG. 8), a translating cylinder 54, and a shroud 56. The actuator 48 extends axially between a base end 58 of the jackhead 50 and a distal end 60 of the translating cylinder 54 along a central axis 62. The shroud 56 extends axially from the jackhead 50 to a shroud distal end 64. In the actuator 48 retracted configuration shown in FIG. 6, substantially all of the translating cylinder 54 is disposed within the shroud 56 in a fully retracted position. In the actuator 48 deployed configuration shown in FIG. 7, substantially all of the translating cylinder 54 is extended out from the shroud 56 in a fully extended position.

FIG. 8 is a diagrammatic sectional representation of the actuator 48, cut to shorten the axial length of the actuator 48 for viewing purposes. The ball screw arrangement 52 includes a screw shaft 66, a ball nut 68, and a plurality of ball bearings 70. The screw shaft 66 extends axially from a drive end 66A to a distal end 66B and is rotatable about the central axis 62. The screw shaft 66 includes a drive engagement portion 66C and a screw portion 66D. The drive engagement portion 66C extends from the drive end 66A toward the screw portion 66D and the screw portion 66D extends from the distal end 66B of the screw shaft 66 towards drive engagement portion 66C. In the non-limiting embodiment shown in FIG. 8, a shoulder section 66E is disposed between the drive engagement portion 66C and the screw portion 66D. The screw portion 66D has an outer radial surface that includes a helical groove 72 configured to receive a portion of each ball bearing 70. The annular ball nut 68 includes an inner radial surface configured with grooves, apertures, or any other type of indentation for receiving a portion of the ball bearings 70.

The shroud 56 is attached to a jackhead housing 50A and is disposed radially outside of the translating cylinder 54 (and the screw shaft 66) when the actuator 48 is disposed in the fully retracted position, enclosing all the translating cylinder 54 except the distal end 60 of the translating cylinder 54. Hence, the shroud 56 protects the ball screw arrangement 52 from direct exposure to the external environment and is understood to thereby decrease maintenance requirements. The translating cylinder 54 extends axially from a first end 54A to the distal end 60. The distal end 60 may be configured for attachment to a structural member; e.g., a fan cowl 38 element or an aft cowl 40 element. A non-limiting example of a distal end 60 configuration is a flange that includes an aperture that receives a rod for rotational movement therebetween. The present disclosure is not limited to any particular translating cylinder distal end 60 configuration.

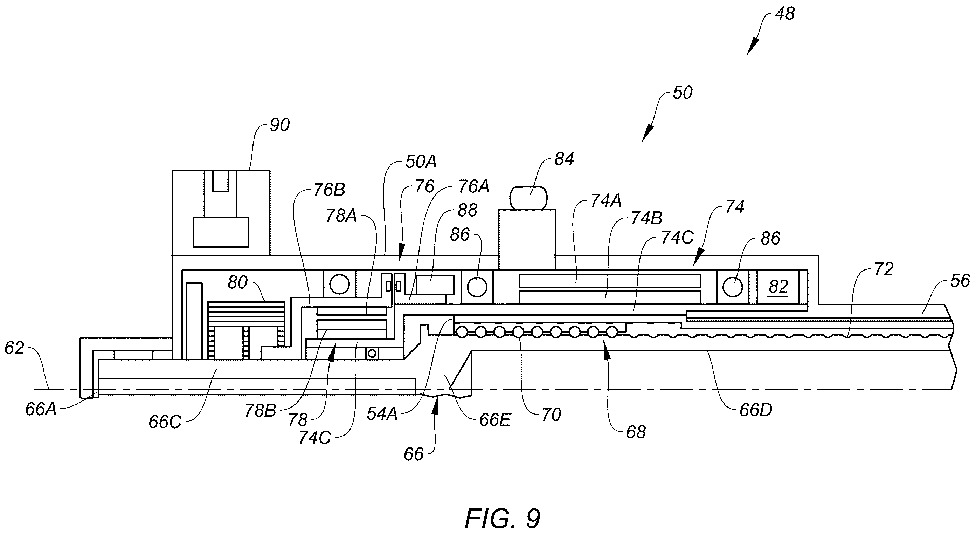

FIG. 9 is an enlarged view of the jackhead 50 to facilitate the description herein. Within the jackhead 50, the actuator 48 includes an electric motor 74, an actuator clutch 76, a rotary magnetic damper 78, a gear box 80, and a Sprag clutch 82, all configured as annular structures centered on the screw shaft 66 and therefore also on the central axis 62. The annular electric motor 74, actuator clutch 76, magnetic damper 78, and gear box 80 may be referred to as a toroidal arrangement.

The electric motor 74 may be an alternating current (AC) motor that includes a stator ("EM stator 74A"), a rotor ("EM rotor 74B"), and an annular motor drive shaft ("EM drive shaft 74C"). The EM stator 74A is engaged with the jackhead housing 50A and is disposed radially outside of the EM rotor 74B. The EM rotor 74B is coupled with the EM drive shaft 74C. As will be detailed herein, when the electric motor 74 is controlled to provide motive force to the actuator 48, the EM rotor 74B and coupled EM drive shaft 74C are rotationally driven. An electrical connector 84 is attached to the jackhead housing 50A for electrical connection between the electric motor 74 and a power source and controls. Bearings 86 may be disposed within the jackhead housing 50A to rotationally support the EM drive shaft 74C.

The actuator clutch 76 includes a first clutch member 76A, a second clutch member 76B, and one or more controllable solenoids 88. To facilitate the description herein, the one or more controllable solenoids 88 will be referred to as a plurality of solenoids 88. The first clutch member 76A is coupled with the EM drive shaft 74C and is axially translatable for frictional engagement with second clutch member 76B. The solenoids 88 may be configured to actuate the first clutch member 76A into or out of frictional engagement with the second clutch member 76B. For example, the first clutch member 76A may be normally biased out of engagement with the second clutch member 76B, and the solenoids 88 may be energized to actuate the first clutch member 76A into frictional engagement with the second clutch member 76B. The force that "normally biases" the first clutch member 76A out of engagement with the second clutch member 76B (i.e., an "actuator clutch disengaged" configuration) may be provided by a spring (not shown). The present disclosure, however, is not limited to any particular clutch biasing structure. In alternative actuator clutch 76 configurations, the solenoids 88 may be energized to actuate the first clutch member 76A to disengage with the second clutch member 76B, or the solenoids 88 may be controlled to both engage the clutch and disengage the clutch. The present disclosure is not limited to any particular actuator clutch engage / disengage architecture.

The annular rotary magnetic damper 78 includes an annular first element ("MD first element 78A") and an annular second element ("MD second element 78B"). The MD first element 78A is coupled with the second clutch member 76B and the MD second element 78B is coupled with the EM drive shaft 74C. The MD first element 78A and the MD second element 78B are disposed in a contact-less arrangement wherein the MD first element 78A and the MD second element 78B are in close proximity to one another, but are not in contact with one another. The MD stator and rotor elements 78A, 78B are configured such that relative movement therebetween (e.g., the MD first element 78A rotating relative to the MD second element 78B) produces a magnetic damping force that resists the relative movement therebetween. The rotary magnetic damper 78 may be a passive eddy current damper which operates based on the relative motion between the MD first element 78A and the MD second element 78B. During extension of the actuator 48, there is no relative motion between the MD first element 78A and the MD second element 78B; i.e., they rotate together. However, during retraction of the actuator 48, the actuator clutch 76 is disengaged causing a decoupling of the MD first element 78A and the MD second element 78B. This creates a relative motion between the MD first element 78A and the MD second element 78B and the relative motion causes generation of an eddy current and consequent damping. The rotary magnetic damper 78 may be configured based on the anticipated load applied to the actuator 48 to produce a substantially controlled rate of retraction. The actuator clutch 76 may be configured to limit the load at the end of actuator stroke; e.g., the actuator clutch 76 will slip at a given torque load to prevent damage to the ball screw arrangement 52 or overloading the fan cowl or C-Duct door structure.

The annular gear box 80 is engaged with the second clutch member 76B and with the screw shaft 66. The gear box 80 is configured to receive a rotational input from the second clutch member 76B (i.e., at a first rotational speed R1 and a first torque T1) and produce a rotational output; i.e., at a second rotational speed R2 and a second torque, wherein R1 > R2, and T2 > T1. The rotational output of the gear box 80 is engaged with the screw shaft 66; e.g., engaged with the drive engagement portion 66C of the screw shaft 66. A non-limiting example of an acceptable gear box 80 configuration is a planetary gear configuration. The present disclosure is not limited to any particular annular gear box 80 configuration, however. In some embodiments (e.g., like shown in FIG. 9), the gear box 80 may include a manual drive interface 90 that is configured to allow an operator to manually drive the gear box 80.

The Sprag clutch 82 is engaged with the motor drive shaft. The Sprag clutch 82 is a one directional clutch that allows the EM drive shaft 74C to be driven in a first rotational direction but prevents the EM drive shaft 74C to be driven in an opposite second rotational direction. As will be detailed herein, the Sprag clutch 82 may be configured to allow the EM drive shaft 74C to rotate in a first rotational direction during extension of the actuator 48, and configured to prevent rotation of the EM drive shaft 74C in the opposite rotational direction. The present disclosure is not limited to any particular Sprag clutch 82 configuration.

During operation of the actuator 48 to drive the translating cylinder 54 from a retracted configuration (e.g., see FIG. 6) to a deployed configuration (e.g., see FIG. 7; or from a first deployed configuration to a further extended second deployed configuration - referred to herein as an actuator "deploying mode"), the electric motor 74 is energized and the actuator clutch 76 is disposed in the actuator clutch engaged configuration. In the actuator clutch engaged configuration, the EM drive shaft 74C is coupled to the second clutch member 76B (via actuator clutch engagement), and the second clutch member 76B is engaged with the gear box 80 as an input (e.g., R1, T1). The gear box 80 output (e.g., at R2, T2) is coupled to the drive engagement portion 66C of the screw shaft 66. In this actuator mode, operation of the electric motor 74 causes the screw shaft 66 to rotate. Also in this actuator mode, the Sprag clutch 82 free wheels and does not inhibit rotation of the EM drive shaft 74C. Also in this actuator mode, MD second element 78B (coupled with the EM drive shaft 74C) and the MD first element 78A (coupled with the second clutch member 76B) rotate together; i.e., no relative motion between the MD first element 78A and the MD second element 78B. In the absence of relative motion between the MD first element 78A and the MD second element 78B, no damping force is produced.

Rotation of the screw shaft 66 causes the ball nut 68 to travel axially along the screw shaft 66. Axial travel of the ball nut 68, in turn, causes axial translation of the translating cylinder 54; i.e., the translating cylinder 54 extends outwardly from the actuator 48.

The actuator 48 may be maintained in an extended position to hold the nacelle section (e.g., the fan cowl 38 or aft cowl 40 door in an open position) open (referred to herein as an "actuator holding mode"). The actuator 48 is maintained in the extended position by the Sprag clutch 82 which does not allow the EM drive shaft 74C to rotate in the opposite direction, and by the actuator clutch 76 disposed in the actuator clutch engaged configuration. The actuator clutch 76 is designed with a slipping torque that exceeds the maximum load capacity of the actuator 48.

To retract the actuator 48 (referred to herein as an "actuator retracting mode"), the actuator clutch 76 is controlled to change from the actuator clutch engaged configuration to the actuator clutch disengaged configuration. For example, the solenoids 88 may be deenergized and the first clutch member 76A will return to its normally biased disengaged position. When the actuator clutch 76 is disengaged, the Sprag clutch 82 still prevents reverse rotation of the EM drive shaft 74C, but now the second clutch member 76B is free to rotate. The load applied to the actuator 48 causes the ball nut 68 to travel in a direction (i.e., toward the jackhead 50) that is opposite the ball nut 68 travel direction during actuator extension; (i.e., away from the jackhead 50). During retraction, the ball nut 68 travel causes the screw shaft 66 to rotate, and therefore causes the gear structure within the gear box 80 to rotate as well. The second clutch member 76B of the actuator clutch 76 (coupled with the gear box 80) also rotates. The magnetic damper 78 will oppose the rotation of the second clutch member 76B and thereby damp the retraction of the actuator 48. Specifically, the MD first element 78A is coupled with the second clutch member 76B and the MD second element 78B is coupled with the EM drive shaft 74C. The Sprag clutch 82 prevents rotation of the EM drive shaft 74C. Hence, during retraction there is relative movement between the MD stator and rotor elements 78A, 78B of the magnetic damper 78. The relative motion produces a magnetic damping force that resists the relative movement between the MD stator and MD rotor elements 78A, 78B and thereby applies a braking force that slows the actuator retraction to an acceptable controlled rate of retraction.

The present disclosure actuator 48 provides several advantages over prior art actuators. For example, the annular architecture of the present disclosure actuator 48 provides a balanced torque path and robust vibration response due to symmetrically balanced mass distribution. The non-contact-type passive damping provided by the magnetic damper 78 produces a controlled rate of retraction even in case of power failure and avoids performance degradation over its life from wear that may be associated with a contact-type braking arrangement. The annular motor design of the present disclosure actuator 48 also provides an advantageously small fully retracted actuator length and thereby provides a desirable stroke to installed length ratio. The annular design of the present disclosure actuator 48 (e.g., the electric motor 74 and the actuator clutch 76) also facilitates sizing the actuator 48 for working loads and torque; i.e., the actuator 48 can be smaller sized (less weight) for smaller loads and larger sized for heavier loads. The annular design of the present disclosure actuator 48 also provides improved resistance to buckling problems associated with actuators having a side mounted motor. The enclosure provided by the shroud 56 is understood to lower maintenance requirements.

While the principles of the disclosure have been described above in connection with specific apparatuses and methods, it is to be clearly understood that this description is made only by way of example and not as limitation on the scope of the disclosure. Specific details are given in the above description to provide a thorough understanding of the embodiments. However, it is understood that the embodiments may be practiced without these specific details.

It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this disclosure by way of reference). It is noted that these connections are general and, unless specified otherwise, may be direct or indirect and that this specification is not intended to be limiting in this respect. Any reference to attached, fixed, connected or the like may include permanent, removable, temporary, partial, full and/or any other possible attachment option.

No element, component, or method step in the present disclosure is intended to be dedicated to the public regardless of whether the element, component, or method step is explicitly recited in the claims. As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various inventive aspects, concepts and features of the disclosures may be described and illustrated herein as embodied in combination in the exemplary embodiments, these various aspects, concepts, and features may be used in many alternative embodiments, either individually or in various combinations and sub-combinations thereof. Unless expressly excluded herein all such combinations and sub-combinations are intended to be within the scope of the present application. Still further, while various alternative embodiments as to the various aspects, concepts, and features of the disclosures--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements. It is further noted that various method or process steps for embodiments of the present disclosure are described herein. The description may present method and/or process steps as a particular sequence. However, to the extent that the method or process does not rely on the particular order of steps set forth herein, the method or process should not be limited to the particular sequence of steps described. As one of ordinary skill in the art would appreciate, other sequences of steps may be possible. Therefore, the particular order of the steps set forth in the description should not be construed as a limitation.

## Claims

1. An electromechanical actuator having an axial centerline, comprising:
an annular gear box (80);
a ball screw arrangement (52) extending along the axial centerline, the ball screw arrangement (52) including a screw shaft (66) rotatable about the axial centerline, an annular ball nut (68), and a plurality of ball bearings (70), wherein the screw shaft (66) includes a helical groove (72) configured to receive a portion of each ball bearing, and wherein the annular ball nut (68) is engaged with the screw shaft (66) with the plurality of ball bearings (70) disposed between the screw shaft (66) and the ball nut, and wherein the screw shaft (66) is coupled with the gear box;
an annular electric motor (74), EM, having an EM stator (74A), an EM rotor (74B), and an EM drive shaft (74C), wherein the EM rotor (74B) is coupled with the EM drive shaft (74C);
a one-way clutch coupled with the EM drive shaft (74C), wherein the one-way clutch is configured to permit rotation of the EM drive shaft (74C) in a first rotational direction and to not permit rotation of the EM drive shaft (74C) in a second rotational direction that is opposite the first rotational direction;
an actuator clutch (76) having a first clutch member (76A) and a second clutch member (76B), wherein the first clutch member (76A) is coupled with the EM drive shaft (74C) and the second clutch member (76B) is coupled with the gear box, and wherein the actuator clutch (76) is disposable in an engaged configuration and a disengaged configuration;
a rotary magnetic damper (78), MD, having an MD first element (78A) and an MD second element (78B), wherein the MD first element (78A) is coupled with the second clutch member (76B) and the MD second element (78B) is coupled with the EM drive shaft (74C); and
a translating cylinder (54) engaged with the ball nut;
wherein the electromechanical actuator is disposable in a retracted configuration wherein the translating cylinder (54) is retracted and in a deployed configuration wherein the translating cylinder (54) is deployed axially outwardly.

2. The electromechanical actuator of claim 1, further comprising a housing (50A) that encloses the annular electric motor (74), the one-way clutch, the actuator clutch (76), and the rotary magnetic damper (78).

3. The electromechanical actuator of claim 2, further comprising a shroud (56) disposed radially outside of the translating cylinder (54) when the electromechanical actuator is in the retracted configuration.

4. The electromechanical actuator of claim 3, wherein the shroud (56) is configured to enclose all the translating cylinder (54) except a distal end of the translating cylinder (54) when the electromechanical actuator is in the retracted configuration.

5. The electromechanical actuator of any preceding claim, wherein the screw shaft (66) includes a drive engagement portion (66C) and a screw portion, and the screw portion has an outer radial surface that includes a helical groove (72) configured to receive a portion of each ball bearing, and wherein the annular ball nut (68) is disposed radially outside of the screw portion of the screw shaft (66) and includes an inner radial surface configured with indentations for receiving a portion of the ball bearings (70), and wherein the drive engagement portion (66C) is coupled with the gear box.

6. The electromechanical actuator of any preceding claim, wherein an actuator clutch (76) includes a solenoid (88) and the solenoid (88) is controllable to actuate the actuator clutch (76) between the engaged configuration and the disengaged configuration.

7. The electromechanical actuator of claim 6, wherein the actuator clutch (76) is normally disposed in the disengaged configuration and the solenoid (88) is controllable to actuate the actuator clutch (76) into the engaged configuration.

8. The electromechanical actuator of any preceding claim, wherein the one-way clutch is a Sprag clutch.

9. The electromechanical actuator of any preceding claim, wherein the rotary magnetic damper (78) is a passive eddy current damper.

10. The electromechanical actuator of any preceding claim, wherein the electromechanical actuator is configured to operate in an actuator deploying mode or an actuator retracting mode.

11. The electromechanical actuator of claim 10, wherein in the actuator deploying mode, the annular electric motor (74) drives the gear box, and the gear box drives the screw shaft (66), and the screw shaft (66) drives the ball nut axially, and the ball nut causes the translating cylinder (54) to axially translate outwardly.

12. The electromechanical actuator of claim 10, wherein in the actuator deploying mode, the EM drive shaft (74C) is rotating in the first rotational direction and the one-way clutch is in a free-wheeling mode, and optionally wherein in the actuator deploying mode, the actuator clutch (76) is in the engaged configuration, and optionally wherein in the actuator deploying mode, the MD first element (78A) and the MD second element (78B) are stationary relative to one another, and optionally wherein in the actuator deploying mode, the translating cylinder (54) is exposed outside of the shroud (56).

13. The electromechanical actuator of claim 10, wherein in the actuator retracting mode, the MD first element (78A) and the MD second element (78B) are moving relative to one another.

14. The electromechanical actuator of claim 13, wherein in the actuator retracting mode, the rotary magnetic damper (78) produces an electromagnetic force that opposes rotation of the screw shaft (66).

15. The electromechanical actuator of claim 13, wherein in the actuator retracting mode, the actuator clutch (76) is in the disengaged configuration, and optionally wherein in the actuator retracting mode, a load applied to the translating cylinder (54) causes the translating cylinder (54) to axially translate inwardly, the translating cylinder (54) drives the ball nut axially, the ball nut causes the screw shaft (66) to rotate, and the screw shaft (66) drives the gear box, and optionally wherein in the actuator retracting mode, the one-way clutch is configured to prevent rotation of the EM drive shaft (74C).
